# EUROPEAN PATENT APPLICATION

(11) **EP 3 439 270 A1**
(43) Date of publication of application: **06.02.2019**
(21) Application number: 17773098.3
(22) Date of filing: 21.03.2017
(51) Int. Cl.: H04L 29/08

(54) **METHOD, APPARATUS AND SYSTEM FOR CHECKING CHANGE OF TELEPHONE NUMBER**

(30) Priority: 30.03.2016 CN 201610191007
(71) Applicant: Alibaba Group Holding Limited, Grand Cayman (KY)
(72) Inventor: LUO, Yunguang, Hangzhou Zhejiang 311121 (CN)
(74) Representative: Barker Brettell LLP
(86) International application number: PCT/CN2017/077494
(87) International publication number: WO 2017/167068

(57) **Abstract**

The present invention discloses a method, an apparatus and a system for checking a change of a phone number. The method includes: detecting whether phone numbers of one or more users in a first address book are changed; when detecting that a phone number of a first user in the first address book is changed, obtaining the total number of detected changes of the phone number of the first user through accumulation; and if the total number exceeds a check threshold, determining that the phone number of the first user has been changed. The present invention solves a technical problem of inaccuracy of a phone number recorded in an address book of a user caused by frequent changes to the phone number in the address book.

## Description

### Technical Field

The present invention relates to the field of data processing, and, more particularly, to a method, an apparatus and a system for checking change of a phone number.

### Background

In the contemporary era with advanced information exchange, phone numbers are still an important way for people to communicate with each other. A user usually stores phone numbers locally on a mobile phone or any mobile terminal. When the user changes the mobile phone or mobile terminal, he/she only needs to store the phone numbers into a network terminal and then use a new mobile phone or mobile terminal to download the phone numbers. Therefore, a large number of users store address books of phone numbers into the network terminal.

However, mobile phone numbers of network users are changed very frequently, so that in an address book of a user, a lot of mobile phone numbers have been changed or become unavailable and cannot be used. Thus, it is difficult to find a corresponding user through a phone number in a current address book.

An effective solution has not yet been proposed at present for the technical problem of inaccuracy of a phone number recorded in an address book of a user caused by frequent changes to the phone number in the address book.

### Summary

The example embodiments of the present invention provide a method, an apparatus and a system for checking a change of a phone number, so as to at least solve the technical problem of inaccuracy of a phone number recorded in an address book of a user caused by frequent changes to the phone number in the address book.

According to an aspect of the example embodiments of the present invention, a method for checking a change of a phone number is provided, including: detecting whether phone numbers of one or more users in a first address book are changed; when detecting that a phone number of a first user in the first address book is changed, obtaining the total number of detected changes of the phone number of the first user through accumulation; and if the total number exceeds a check threshold, determining that the phone number of the first user has been changed.

According to another aspect of the example embodiments of the present invention, a system for checking a change of a phone number is further provided, including: a mobile terminal configured to store a first address book, wherein the first address book records phone numbers of one or more users; and a cloud server having a communication relationship with the mobile terminal, configured to detect whether the phone numbers of one or more users in the first address book are changed, when detecting that a phone number of a first user in the first address book is changed, obtain the total number of detected changes of the phone number of the first user through accumulation, and if the total number exceeds a check threshold, determine that the phone number of the first user has been changed.

According to yet another aspect of the example embodiments of the present invention, an apparatus for checking a change of a phone number is further provided, including: a detection module configured to detect whether phone numbers of one or more users in a first address book are changed; an accumulation module configured to, when it is detected that a phone number of a first user in the first address book is changed, obtain the total number of detected changes of the phone number of the first user through accumulation; and a determination module configured to, if the total number exceeds a check threshold, determine that the phone number of the first user has been changed.

It should be noted here that the moment for performing the step of detecting whether phone numbers of one or more users in a first address book are changed is not specifically limited in the present application. The step may be performed when the user sends a request or may be performed according to a preset period when the period is reached. The phone numbers in the address book of the user may be detected according to a request of the user or according to a certain period, such that the user may timely know phone numbers that have changed in the address book.

It should be noted here that as the solution provided in the present application confirms that a phone number of a user is changed when detecting that the number of changes of the phone number of a first user exceeds a preset number. Thus, the techniques of the present invention avoid the mistake to confirm the change of the phone number while there is no change due to an incorrect detection, or incorrect storage of the phone number of the user.

As shown from the above, according to the solution of checking a change of a phone number provided in the present application, a change of a phone number in a first address book is checked; however, when determining whether any phone number in an address book is changed, determination is made by using the total number of changes of the phone number in multiple address books or by using the number of changes of the phone number recorded in one address book that are obtained through detection at different moments according to a preset period. As a result, changes of the phone number in the address book of the user may be detected sensitively, and the accuracy of the detected changes of the phone number may also be ensured.

Thus, the solution in the example embodiments provided in the present application solve the technical problem of inaccuracy of a phone number recorded in an address book of a user caused by frequent changes to the phone number in the address book.

### Brief Description of the Drawings

The accompanying drawings described here are provided to further understand the present invention and constitute a part of the present application. Example embodiments of the present invention and descriptions of the example embodiments are used to explain the present invention and do not pose any improper limitations to the present invention. In the drawings,
FIG. 1 is a structural block diagram of hardware of a computer terminal of a method for checking a change of a phone number according to an example embodiment of the present invention;
FIG. 2 is a flowchart of a method for checking a change of a phone number according to Example embodiment 1 of the present application;
FIG. 3 is a flowchart of an optional method for checking a change of a phone number according to Example embodiment 1 of the present application;
FIG. 4 is an information interaction diagram of a method for checking a change of a phone number according to Example embodiment 1 of the present application;
FIG. 5 is a structural diagram of a system for checking a change of a phone number according to Example embodiment 1 of the present application;
FIG. 6 is a structural diagram of an apparatus for checking a change of a phone number according to Example embodiment 2 of the present application;
FIG. 7 is a structural diagram of an optional apparatus for checking a change of a phone number according to Example embodiment 3 of the present application;
FIG. 8 is a structural diagram of an optional apparatus for checking a change of a phone number according to Example embodiment 3 of the present application;
FIG. 9 is a structural diagram of an optional apparatus for checking a change of a phone number according to Example embodiment 3 of the present application;
FIG. 10 is a structural diagram of an optional apparatus for checking a change of a phone number according to Example embodiment 3 of the present application;
FIG. 11 is a structural diagram of an optional apparatus for checking a change of a phone number according to Example embodiment 3 of the present application;
FIG. 12 is a structural diagram of an optional apparatus for checking a change of a phone number according to Example embodiment 3 of the present application;
FIG. 13 is a structural diagram of an optional apparatus for checking a change of a phone number according to Example embodiment 3 of the present application;
FIG. 14 is a structural diagram of an apparatus for checking a change of a phone number according to Example embodiment 3 of the present application;
FIG. 15 is a structural diagram of an optional apparatus for checking a change of a phone number according to Example embodiment 3 of the present application; and
FIG. 16 is a structural block diagram of a computer terminal according to Example embodiment 4 of the present application.

### Detailed Description

In order to make those skilled in the art better understand the solutions of the present invention, the technical solutions in the example embodiments of the present invention will be clearly and fully described below with reference to the accompanying drawings in the example embodiments of the present invention. It is apparent that the example embodiments to be described are only a part rather than all the example embodiments of the present invention. All other example embodiments derived without creative efforts by those of ordinary skill in the art based on the example embodiments of the present invention should fall within the protection scope of the present invention.

It should be noted that the terms "first", "second", and so on in the specification, claims and the drawings of the present invention are used to distinguish similar objects, but not necessarily to describe a particular order or sequence. It should be understood that data used as such may be interchanged under appropriate circumstances, so that the example embodiments of the present invention described here could be implemented in an order other than those illustrated or described here. In addition, the terms "comprise/include" and "have" as well as their any variations are intended to cover non-exclusive inclusion. For example, a process, method, system, product or device including a series of steps or units is not necessarily limited to the steps or units clearly listed, but may include other steps or units not clearly listed or inherent to the process, method, system, product or device.

First of all, some terminologies or terms appearing during the description about the example embodiments of the present application apply to the following interpretation:
Big data: Big data (mega data) refers to massive and diversified information resources at a high growth rate that may have stronger decision-making power, insight and process optimization capability only with new processing modes.

Invalid number: An invalid number indicates a number that becomes unavailable, such as an empty number, an expired number, or a number being out of service.

### Example embodiment 1

According to this example embodiment of the present invention, a method example embodiment of a method for checking a change of a phone number is further provided. It should be noted that the steps shown in the flowchart of the figure may be performed in such as a computer system of a set of computer executable instructions, and although a logic order is shown in the flowchart, in some cases, the steps shown or described may be performed in an order different from the order here.

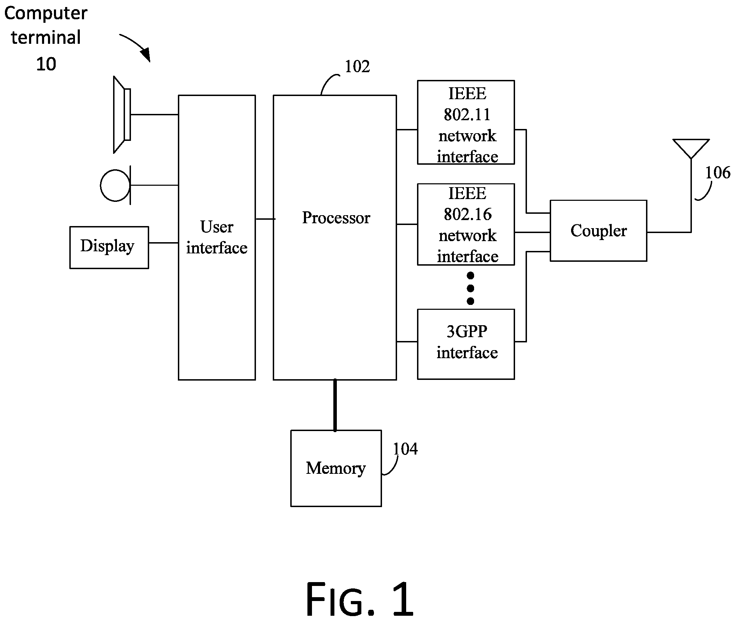

The method example embodiment provided in Example embodiment 1 of the present application may be performed in a mobile terminal, a computer terminal or a similar arithmetic device. For example, the method runs on a computer terminal. FIG. 1 is a structural block diagram of hardware of a computer terminal of a method for checking a change of a phone number according to an example embodiment of the present invention. As shown in FIG. 1, a computer terminal 10 may include one or more (only one is shown in the figure) processors 102 (the processor 102 may include, but is not limited to, a processing apparatus such as a microprocessor MCU or a programmable logic device FPGA), a memory 104 configured to store data, and a transmission module 106 having a communication function. Those of ordinary skill in the art may understand that the structure shown in FIG. 1 is only for the purpose of illustration and does not limit the structure of the above electronic device. For example, the computer terminal 10 may further include more or fewer components than those shown in FIG. 1 or have a configuration different from that shown in FIG. 1.

The memory 104 may be configured to store a software program and module of an application, for example, a program instruction/module corresponding to the method for checking a change of a phone number in the example embodiment of the present invention. The processor 102 runs the software program and module stored in the memory 104 to implement various functional applications and perform data processing, that is, implement the method for checking a change of a phone number of the application. The memory 104 may include a high-speed random-access memory, and may also include a nonvolatile memory, for example, one or more magnetic storage devices, flash memories or other nonvolatile solid-state memories. In some examples, the memory 104 may further include memories remotely disposed with respect to the processor 102, and these remote memories may be connected to the computer terminal 10 through a network. Examples of the network include, but are not limited to, the Internet, an intranet, a local area network, a mobile communications network, or a combination of them.

The transmission module 106 is configured to receive or send data via a network. For example, the network may specifically include a wireless network provided by a communication provider of the computer terminal 10. In an example, the transmission module 106 includes a Network Interface Controller (NIC), which may be connected to another network device through a base station so as to be capable of communicating with the Internet. In an example, the transmission module 106 may be a Radio Frequency (RF) module, which is configured to communicate with the Internet in a wireless manner.

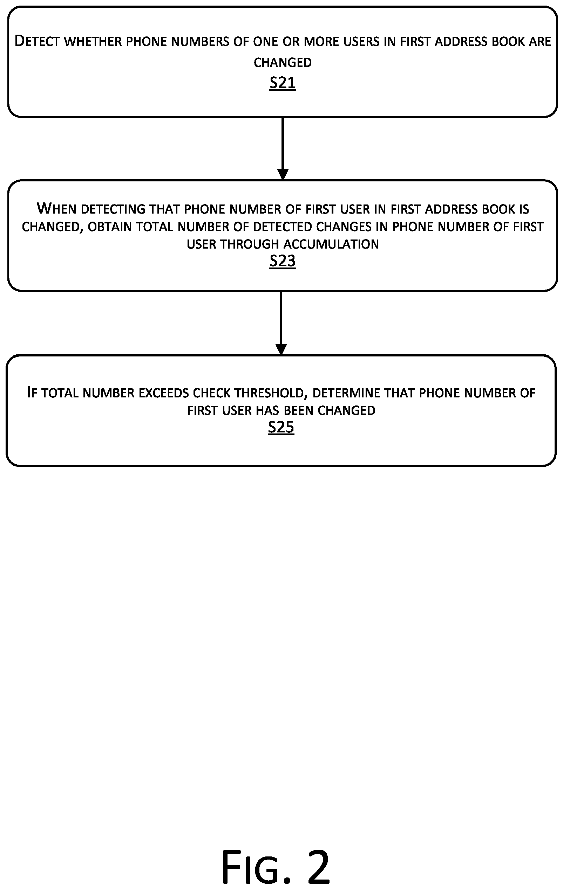

In the above operating environment, the present application provides a method for checking a change of a phone number as shown in FIG. 2. The method may be implemented in a cloud server. FIG. 2 is a flowchart of a method for checking a change of a phone number according to Example embodiment 1 of the present invention.

Step S21: Detect whether phone numbers of one or more users in a first address book are changed.

In the above step, the first address book is an address book of any user. The phone numbers of one or more users are one or more phone numbers recorded in the address book of the any user. That a phone number of the user has been changed at least includes the following situations: any user in the address book changes a phone number such that the phone number stored in the current address book becomes unavailable, the phone number is out of service as any user in the address book makes no payment or due to other reasons, and the phone number has become an empty number.

Step S23: When it is detected that a phone number of a first user in the first address book is changed, the total number of detected changes of the phone number of the first user is obtained through accumulation.

In the above step, the first user is any user in the first address book whose phone number is changed.

It should be noted here that the total number of changes of the phone number of the first user is used to indicate the total number of changes of the phone number of the first user detected and counted in multiple address books. When it is detected that a phone number of a first user in the first address book is changed, the number of changes of the phone number of the first user should be increased by one on the basis of the original number.

Step S25: If the total number exceeds a check threshold, determine that the phone number of the first user has been changed.

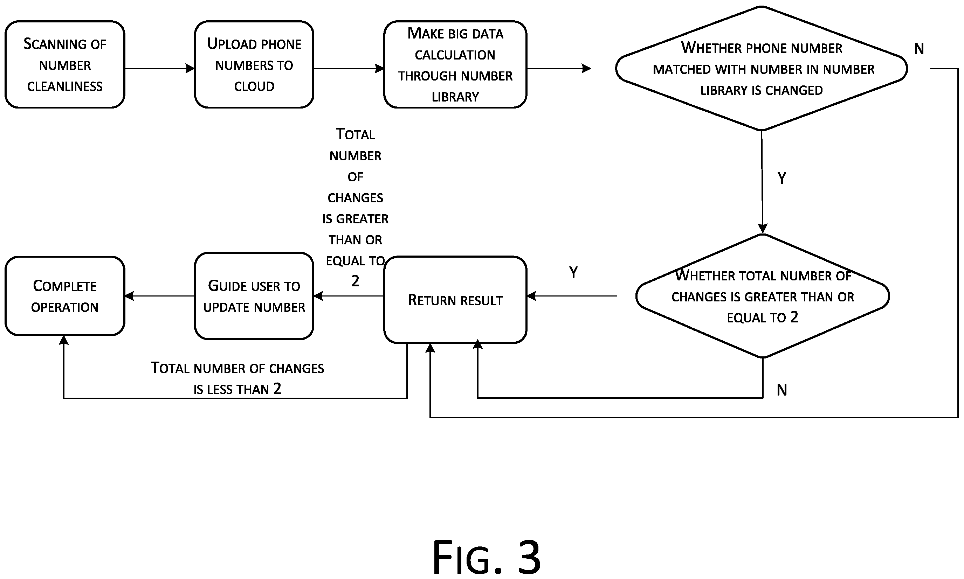

FIG. 3 is a flowchart of an optional method for checking a change of a phone number according to Example embodiment 1 of the present application. With reference to the example shown in FIG. 3, the cloud server of the present invention may acquire a first address book recorded in any mobile terminal and read phone numbers of all users in the first address book. Then, the cloud server matches the phone numbers with phone numbers of multiple users pre-stored locally to determine whether a phone number of a user in the first address book is changed. For example, the cloud server may determine whether the phone number of a first user in the first address book is changed. If determining that the phone number of the first user has been changed, the cloud server obtains the number of changes of the phone number of the first user through accumulation, and further determines whether the total number of changes of the phone number of the first user exceeds a preset check threshold. In this example, the preset check threshold is 2. That is, when the total number of changes of the phone number of the first user is greater than or equal to 2, it is confirmed that the phone number of the first user has been changed.

It should be noted here that in an optional example embodiment, the cloud server may read multiple address books, and if detecting that the phone number of the same first user in one or more address books is changed, obtain the number of changes of the phone number of the first user in each address book through accumulation. In another example embodiment, the cloud server may also detect the first address book according to a preset interval (e.g., every two weeks), and increase the number of changes by one each time the cloud server detects that the phone number of the first user in the first address book is changed.

It should be further noted here that the moment for performing the step of detecting whether phone numbers of one or more users in a first address book are changed is not specifically limited in the present application. The step may be performed when the user sends a request or may be performed according to a preset period when the period time is reached. The phone numbers in the address book of the user are detected according to a request of the user or according to a certain period, such that the user may timely know phone numbers that have changed in the address book.

It should be noted here that as the method provided in the above example embodiment confirms that a phone number of a user is changed only when it is detected that the number of changes of the phone number of a first user exceeds a preset number, it may be avoided that when a user does not change a phone number, the phone number of the user is confirmed as been changed due to an incorrect detection or incorrect storage of the phone number of the user.

As may be known from the above, according to the solution of checking a change of a phone number provided in the above example embodiment of the present application, a change of a phone number in a first address book is checked. When it is determined whether any phone number in an address book is changed, determination is made by using the total number of changes of the phone number in multiple address books or by using the number of changes of the phone number recorded in one address book that are obtained through detection at different moments according to a preset period. As a result, changes of the phone number in the address book of the user may be detected sensitively, and the accuracy of the detected changes of the phone number may also be ensured.

Thus, the solution in Example embodiment 1 provided in the present application solves the technical problem of inaccuracy of a phone number recorded in an address book of a user caused by frequent changes to the phone number in the address book.

In the above example embodiment of the present application, before step S21 of detecting whether phone numbers of one or more users in a first address book are changed, the method further includes the following steps:
Step S27: A permission to access the first address book is acquired.

In the above step, the first address book may be an address book located at a user mobile terminal locally.

In an optional example embodiment, for example, a cloud server acquires a permission to access the first address book. The user considers that the cloud server may acquire an address book of the user all the time by default, and then the cloud server may acquire the address book of the user regularly. In another optional example embodiment, for example, a cloud server still acquires a permission to access the first address book. Each time the cloud server accesses the address book, the cloud server needs to acquire an access permission to access the address book. For example, when the cloud server needs to access an address book of a user, the cloud server may put forward an access request for accessing the address book to the user.

In yet another optional example embodiment, an address book of a user is a labeled address book. For example, the address book of the user includes: colleagues, friends, classmates and other groups. When an access permission to access the address book is acquired, the user may set that a cloud server has a permission to access address books in one or more groups in all the address books but does not have permission to access address books in the remaining groups, thus achieving a technical effect of accessing the address book of the user without violating the user's privacy.

Step S29: The phone numbers of one or more users in the first address book are acquired by scanning the first address book.

Step S31: The phone numbers of one or more users in the first address book are synchronized to a number library.

In the above step, the number library may be a data server stored at a cloud server and is used to store phone numbers obtained by scanning.

With reference to the example shown in FIG. 3, in an optional example embodiment, by taking a user A as an example, first of all, a step of scanning number cleanliness of an address book of the user A is performed. In this step, a permission to access the address book of the user A is acquired, then phone numbers in the address book of the user A are scanned, and the scanning result is uploaded to a cloud number library.

In the above example embodiment of the present application, step S21 of detecting whether phone numbers of one or more users in a first address book are changed includes the following step:
Step S211: The phone numbers of one or more users in the first address book are sequentially matched with phone numbers of users pre-stored in the number library, wherein if the first user in the first address book exists in the number library and the phone number of the first user pre-stored in the number library is different from the phone number of the first user in the first address book, it is determined that the phone number of the first user has been changed.

With reference to the example shown in FIG. 3, in an optional example embodiment, still by taking a user A as an example, big data calculation is made through a number library. In the calculation process, the phone numbers of one or more users in an address book of the user A may be sequentially matched with phone numbers of users pre-stored in the number library. Phone numbers of users are pre-stored in the number library. After phone numbers in the address book of the user A are synchronized to a cloud database, the pre-stored phone numbers are matched with the phone numbers in the address book of the user A. A matching criterion may be that user names corresponding to the phone numbers are the same, or the like. A matching method may be selecting a phone number of any user a in the address book of the user A, searching the numbers pre-stored in the number library for the phone number of the user a. If the number of the user a exists in the pre-stored numbers, the two numbers are matched. If the matching is successful, it may be considered that the phone number of the user a is not changed. If the matching fails, it may be considered that the phone number of the user a is changed.

It should be noted here that the address book of the user A includes multiple phone numbers. In the matching process, the phone numbers may be scanned according to an original arrangement order in the address book of the user A, or the phone numbers in the address book of the user A may also be re-arranged according to a preset arrangement rule and then matching is performed according to a new order after arrangement.

In the above example embodiment of the present application, step S23 of obtaining the total number of detected changes of the phone number of the first user through accumulation includes the following step:
Steps S231: The number of historical changes of the phone number of the first user is read, wherein each time it is detected that the phone number of the first user recorded in another address book is changed, the number of changes of the phone number of the first user is increased by one to obtain the number of historical changes.

In the above step, the number of historical changes is the number of changes of the phone number of the first user detected before the current moment.

It should be noted here that the number of historical changes of the phone number of the first user is the number of changes of the phone number of the first user recorded in other address books other than the address book being currently detected.

Step S233: If it is currently detected that the phone number of the first user recorded in the first address book is changed, the number of changes of the phone number of the first user is increased by one again based on the number of historical changes to obtain the total number of the detected changes of the phone number of the first user.

In the above step, when it is obtained upon completion of detection on the current first address book that the phone number of the first user in the first address book is changed, the number of historical changes of the phone number of the first user under the current circumstance is obtained by adding 1 to the total number of changes of the phone number of the first user.

In the above step of the present application, before step S21 of detecting whether phone numbers of one or more users in a first address book are changed, the method further includes the following step:
Step S33: It is detected whether an invalid phone number exists in the first address book.

In the above step, the invalid phone number may be a phone number that is expired, out of service and cannot be used normally.

In the above step of the present application, step S33 of detecting whether an invalid phone number exists in the first address book includes the following steps:
Step S31: Phone numbers of one or more users in the first address book are extracted by using a phone simulator.

In the above step, the phone simulator may implement various functions that may be implemented by a phone but does not have a phone entity. The phone simulator may be a software application program that implements a phone function and implements functions similar to a phone through specific setting of the software application program. The phone numbers extracted by the phone simulator are phone numbers being currently detected by the phone simulator whether to be invalid phone numbers.

Step S33: The phone simulator simulates the phone numbers of one or more users to perform any of the following client terminal operations: making a call, sending a text message and sending a message using social software; wherein if the phone simulator simulates a phone number of any user but fails to perform the client terminal operation, it is determined that the phone number for which the client terminal operation is unsuccessful is the invalid phone number.

In an optional example embodiment, for example, the phone simulator makes calls to one or more phone numbers. The phone simulator makes a call to any phone number. It is considered that the phone number is a valid phone number when the call is made successfully and the line is busy. It is considered that the phone number is an invalid number when feedback information obtained by dialing the phone number indicates that the number is an empty number, the number has been out of service, or the like. If power-off occurs when the phone number is dialed, a determination result for the phone number is retained, and the phone number is redialed within a predetermined time for confirmation. If power-off always occurs when the phone number is dialed multiple times, the phone number is considered as an invalid phone number by default.

It should be noted here that the operation performed by the phone simulator may be, but is not limited to, any of the above operations. Any operation that may be performed by the phone simulator and may be used to confirm whether the phone number is an invalid phone number may be the operation in the above step.

In the above step of the present application, after step S33 of detecting whether an invalid phone number exists in the first address book, the method further includes the following steps:
Step S35: The invalid phone number is removed from the first address book to obtain at least one valid phone number.
Step S37: A change of the at least one valid phone number is detected.

In the above example embodiment of the present application, there is no point in checking a change in an invalid phone number. In the above step, the invalid phone number is removed from the first address book, so that the number of phone numbers in which the changes are detected is reduced, thus reducing the waste of computing resources and eliminating redundant data from the address book of the user.

In the above step of the present application, after the step of determining that the phone number of the first user has been changed and/or determining that an invalid phone number exists in the first address book, the method further includes: displaying prompt information in an interface of a display terminal, the prompt information including any of the following information: whether to verify the phone number of the first user, whether to replace the phone number of the first user, whether to create a phone number of the first user, and whether to delete a historical phone number of the first user.

In an optional example embodiment, when detecting that the phone number of the first user in the first address book is changed, a cloud server sends, to the user of the first address book, prompt information of whether to update the phone number of the first user. The prompt information is displayed on a mobile terminal of the user of the first address book. The user of the first address book may choose, according to his/her own requirement, to replace the current phone number of the first user in the first address book with a new phone number of the first user or to store the phone number of the first user separately.

With reference to the example shown in FIG. 3, when it is determined that the phone number of the first user has been changed, the user is guided to update the phone number of the first user in any manner provided in the above step.

A prompt will be provided to the user for a phone number determined as invalid, and a further operation is performed according to the user's prompt. In another optional example embodiment, the cloud server will still prompt the user which numbers in the first address book of the user are invalid phone numbers and query the user whether to delete the above invalid phone numbers.

With reference to the example shown in FIG. 3, after the detection on the phone number in the first address book is completed, the detection result is fed back to the user. The detection result may be fed back by a text message, by social software or any other manners. When the phone number of the first user is not changed, the operation is completed. If the phone number of the first user is changed, the user is guided to update the phone number of the first user in any manner provided in the above step.

It should be noted here that when a display terminal of the user of the first address book displays prompt information, the present application does not specifically limit a display interface. In an optional example embodiment, the display interface may be a dynamic visualization interface to guide the user to replace the changed phone number of the first user or delete the invalid phone number.

In the above step of the present application, after step S27 of determining that the phone number of the first user has been changed, the method further includes the following steps:
Step S271: A changed phone number of the first user is read.
Step S273: The changed phone number of the first user is returned to the first address book to update the phone number of the first user previously stored in the first address book or add the changed phone number of the first user to the first address book.

After it is confirmed that the phone number of the first user has been changed, in an optional example embodiment, after a changed phone number of the first user is read, the changed phone number of the first user is returned to the first address book, and the phone number of the first user returned to the first address book is stored according to a user indication. When the phone number of the first user is stored, the original phone number of the first user may be replaced, or the changed phone number of the first user is added without processing the original phone number.

In the above step of the present application, before step S271 of reading a changed phone number of the first user, the method further includes the following steps:
Step S275: A degree of intimacy between the first user and a second user is verified, wherein the first address book is stored in a communication terminal held by the second user.

In an optional example embodiment, the degree of intimacy between the first user and the second user may be set by both the first user and the second user. When the degrees of intimacy set by the first user and the second user are equal, it is confirmed that the degree of intimacy is effective. In another optional example embodiment, the degree of intimacy between the first user and the second user may be determined by acquiring call duration and/or call frequency, SMS frequency, and social software communication frequency between the first user and the second user, then the calculated degree of intimacy is sent to the first user and the second user, and after the first user and the second user confirm the degree of intimacy, the degree of intimacy becomes effective.

Step S277: If the degree of intimacy between the first user and the second user exceeds a predetermined threshold, the changed phone number of the first user is allowed to be directly updated to the first address book.

In the above step of the present application, before step S271 of reading a changed phone number of the first user, the method further includes the following steps:
Step S270: A verification request is initiated to a communication terminal held by the first user in any of the following manners: making a call, sending a text message and sending a message using social software.
Step S2710: After response information returned by the communication terminal held by the first user is received, the step of reading a changed phone number of the first user is performed; wherein the response information includes: confirmation information for confirming that the phone number of the first user has been changed and/or for confirming that the changed phone number of the first user is an accurate number.

In an optional example embodiment, after it is confirmed that the phone number of the first user has been changed, a message is sent to the first user by means of social software. The message may be confirming to the user whether his/her phone number is changed or confirming to the first user whether the changed phone number is correct. When it is obtained that the phone number is correct in a confirmation message of the first user, a correct changed phone number of the first user is acquired. Otherwise, a message for acquiring a correct phone number is sent to the first user.

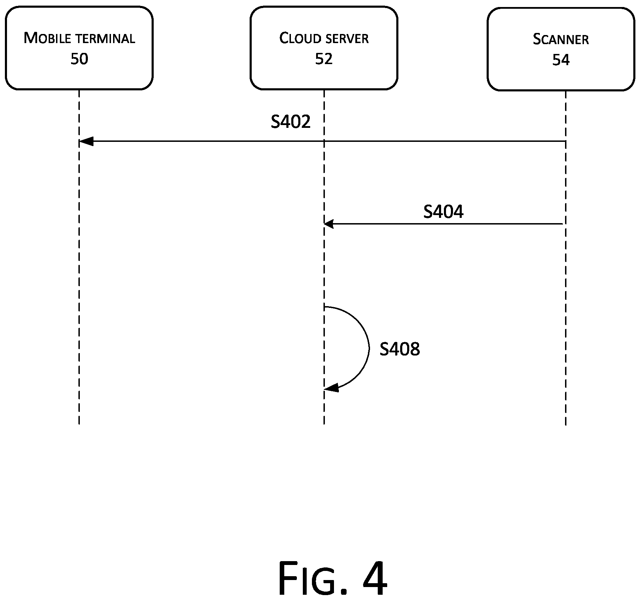

With reference to the illustration in FIG. 4, functions implemented by an application scenario in which the solution of the present application is applied to checking a change of a phone number on a mobile terminal are described in detail below.

FIG. 4 is an information interaction diagram of a method for checking a change of a phone number according to Example embodiment 1 of the present application. As shown in FIG. 4, the method includes the following steps:
Step S402: A scanner scans a first address book stored in a mobile terminal.
Step S404: The scanner synchronizes the first address book obtained by scanning to a cloud server.

In the above steps, if a first user in the first address book exists in a number library and the phone number of the first user pre-stored in the number library is different from the phone number of the first user in the first address book, it is determined that the phone number of the first user has been changed.

Step S406: It is detected whether phone numbers of one or more users in a first address book are changed, when it is detected that a phone number of a first user in the first address book is changed, the total number of detected changes of the phone number of the first user is obtained through accumulation, and if the total number exceeds a check threshold, it is determined that the phone number of the first user has been changed.

In the above step, a phone simulator included in the cloud server simulates the phone numbers of one or more users in the first address book to perform any of the following client terminal operations: making a call, sending a text message and sending a message using social software; wherein if the phone simulator simulates a phone number of any user but fails to perform the client terminal operation, it is determined that the phone number for which the client terminal operation is unsuccessful is the invalid phone number.

It should be noted that for ease of description, the foregoing method example embodiments are all described as a series of action combinations. However, those skilled in the art should understand that the example embodiments of the present invention are not limited to the described sequence of the actions, because some steps may be performed in another sequence or at the same time according to the present invention. In addition, those skilled in the art should also understand that the example embodiments described in this specification all belong to preferred example embodiments, and the involved actions and modules are not necessarily mandatory to the present invention.

Through the description of the implementation manners above, those skilled in the art may clearly understand that the method according to the foregoing example embodiment may be implemented by software plus a necessary hardware platform, and certainly may also be implemented by hardware. However, in many cases, the former is a better implementation manner. Based on such understanding, the technical solution of the present invention essentially, or the part making contributions to the prior art, may be embodied in the form of a software product. The computer software product is stored in a storage medium (such as a ROM/RAM, a magnetic disk, or an optical disc) and includes several instructions to enable a terminal device (which may be a mobile phone, a computer, a server, a network device or the like) to perform the methods in the example embodiments of the present invention.

### Example embodiment 2

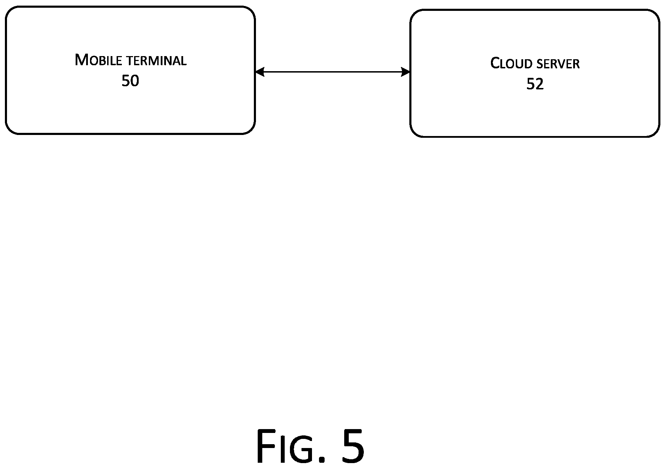

According to this example embodiment of the present invention, a system for checking a change of a phone number is further provided, and the system is configured to implement the method for checking a change of a phone number. As shown in FIG. 5, the system includes a mobile terminal 50 and a cloud server 52.

The mobile terminal 50 is configured to store a first address book, wherein the first address book records phone numbers of one or more users.

The cloud server 52 has a communication relationship with the mobile terminal, and is configured to detect whether the phone numbers of one or more users in the first address book are changed, when detecting that a phone number of a first user in the first address book is changed, obtain the total number of detected changes of the phone number of the first user through accumulation, and if the total number exceeds a check threshold, determine that the phone number of the first user has been changed.

With reference to the example shown in FIG. 3, it is determined whether the phone number of the first user is changed by determining whether data matched with a local number is changed. When the phone number of the first user is changed, it is determined whether the total number of changes of the phone number of the first user exceeds a preset check threshold. In the example, the preset check threshold is 2. That is, when the total number of changes of the phone number of the first user is greater than or equal to 2, it is confirmed that the phone number of the first user has been changed.

It should be noted here that the total number of changes of the phone number of the first user is used to indicate the total number of changes of the phone number of the first user detected and counted in multiple address books. When it is monitored that the phone number of a first user in the first address book is changed, the number of detected changes of the phone number of the first user should be increased by one on the basis of the original number.

It should be noted here that the moment when the cloud server detects whether phone numbers of one or more users in a first address book are changed is not specifically limited in the present application. The cloud server may perform detection when the user sends a request or perform detection according to a preset period when the period time is reached. The phone numbers in the address book of the user are detected according to a request of the user or according to a certain period, such that the user may timely know phone numbers that have changed in the address book.

It should be noted here that in an optional example embodiment, the cloud server may read multiple address books, and if detecting that a phone number of the same first user in one or more address books is changed, obtain the number of changes of the phone number of the first user in each address book through accumulation. In another example embodiment, the cloud server may also detect the first address book according to a preset interval (e.g., every two weeks), and increase the number of changes by one each time the cloud server detects that the phone number of the first user in the first address book is changed.

It should be noted here that as the solution provided in the above example embodiment confirms that a phone number of a user is changed only when it is detected that the number of changes in a phone number of a first user exceeds a preset number, it may be avoided that when a user does not change a phone number, the phone number of the user is confirmed as been changed due to an incorrect detection or incorrect storage of the phone number of the user.

It may be known from the above that according to the solution of checking a change of a phone number provided in the above example embodiment of the present application, a change of a phone number in a first address book is checked. When it is determined whether any phone number in an address book is changed, determination is made by using the total number of changes of the phone number in multiple address books or by using the number of changes of the phone number recorded in one address book that are obtained through detection at different moments according to a preset period. As a result, changes of the phone number in the address book of the user may be detected sensitively, and the accuracy of the detected changes of the phone number may also be ensured.

Thus, the solution in Example embodiment 1 provided in the present application solves the technical problem of inaccuracy of a phone number recorded in an address book of a user caused by frequent changes to the phone number in the address book.

In the above example embodiment of the present application, the system further includes:
a scanner 54 connected between the mobile terminal and the cloud server, configured to scan the first address book and synchronize the phone numbers of one or more users in the first address book to a number library in the cloud server; wherein if the first user in the first address book exists in the number library and the phone number of the first user pre-stored in the number library is different from the phone number of the first user in the first address book, it is determined that the phone number of the first user has been changed.

In the above example embodiment of the present application, the cloud server is further configured to sequentially match the phone numbers of one or more users in the first address book with phone numbers of users pre-stored in the number library to detect whether the phone numbers of one or more users in the first address book are changed.

In the above example embodiment of the present application, the cloud server is further configured to read the number of historical changes of the phone number of the first user, wherein each time it is detected that the phone number of the first user recorded in another address book is changed, the number of changes of the phone number of the first user is increased by one to obtain the number of historical changes; if it is currently detected that the phone number of the first user recorded in the first address book is changed, increase the number of changes of the phone number of the first user by one again based on the number of historical changes to obtain the total number of the detected changes of the phone number of the first user.

In the above example embodiment of the present application, the cloud server includes:
a phone simulator configured to simulate the phone numbers of one or more users in the first address book to perform any of the following client terminal operations: making a call, sending a text message and sending a message using social software;
wherein if the phone simulator simulates a phone number of any user but fails to perform the client terminal operation, it is determined that the phone number for which the client terminal operation is unsuccessful is the invalid phone number.

In the above example embodiment of the present application, the cloud server is further configured to, after detecting whether an invalid phone number exists in the first address book, remove the invalid phone number from the first address book to obtain at least one valid phone number; and detect a change of the at least one valid phone number.

In the above example embodiment of the present application, the system further includes:
a display terminal configured to, after it is determined that the phone number of the first user has been changed and/or it is determined that an invalid phone number exists in the first address book, display prompt information, the prompt information including any of the following information: whether to verify the phone number of the first user, whether to replace the phone number of the first user, whether to create a phone number of the first user, and whether to delete a historical phone number of the first user.

In the above example embodiment of the present application, the cloud server is further configured to, after it is determined that the phone number of the first user has been changed, read a changed phone number of the first user; and return the changed phone number of the first user to the first address book to update the phone number of the first user previously stored in the first address book or add the changed phone number of the first user to the first address book.

In the above example embodiment of the present application, the cloud server is further configured to, before reading a changed phone number of the first user, verify a degree of intimacy between the first user and a second user, wherein the first address book is stored in a communication terminal held by the second user; and if the degree of intimacy between the first user and the second user exceeds a predetermined threshold, allow directly updating the changed phone number of the first user to the first address book.

In the above example embodiment of the present application, the cloud server is further configured to, before reading a changed phone number of the first user, initiate a verification request to a communication terminal held by the first user in any of the following manners: making a call, sending a text message and sending a message using social software. After response information returned by the communication terminal held by the first user is received, the cloud server proceeds to perform the step of reading a changed phone number of the first user; wherein the response information includes: confirmation information for confirming that the phone number of the first user has been changed and/or for confirming that the changed phone number of the first user is an accurate number.

### Example embodiment 3

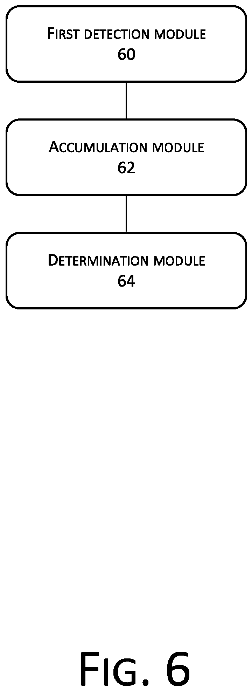

According to this example embodiment of the present invention, an apparatus for checking a change of a phone number is further provided, and the apparatus is configured to implement the method for checking a change of a phone number. As shown in FIG. 6, the apparatus includes a first detection module 60, an accumulation module 62 and a determination module 64.

The first detection module 60 is configured to detect whether phone numbers of one or more users in a first address book are changed.

The accumulation module 62 is configured to, when it is detected that a phone number of a first user in the first address book is changed, obtain the total number of detected changes of the phone number of the first user through accumulation.

The determination module 64 is configured to, if the total number exceeds a check threshold, determine that the phone number of the first user has been changed.

In the above apparatus, the first address book is an address book of any user. The phone numbers of one or more users are one or more phone numbers recorded in the address book of the any user. That a phone number of the user has been changed at least includes the following situations: any user in the address book changes a phone number such that the phone number stored in the current address book becomes unavailable, the phone number is out of service as any user in the address book makes no payment or due to other reasons, and the phone number has become an empty number.

In the above apparatus, the first user is any user in the first address book whose phone number is changed.

It should be noted here that the total number of changes of the phone number of the first user is used to indicate the total number of changes of the phone number of the first user detected and counted in multiple address books. When it is monitored that the phone number of a first user in the first address book is changed, the number of detected changes of the phone number of the first user should be increased by one on the basis of the original number.

It should be noted here that in an optional example embodiment, the cloud server may read multiple address books, and if detecting that the phone number of the same first user in one or more address books is changed, obtain the number of changes of the phone number of the first user in each address book through accumulation. In another example embodiment, the cloud server may also detect the first address book according to a preset interval (e.g., every two weeks), and increase the number of changes by one each time the cloud server detects that the phone number of the first user in the first address book is changed.

It should be noted here that as the solution provided in the above example embodiment confirms that a phone number of a user is changed only when it is detected that the number of changes of the phone number of a first user exceeds a preset number, it may be avoided that when a user does not change a phone number, the phone number of the user is confirmed as been changed due to an incorrect detection or incorrect storage of the phone number of the user.

As may be known from the above, according to the solution of checking a change of a phone number provided in the above example embodiment of the present application, a change of a phone number in a first address book is checked. When it is determined whether any phone number in an address book is changed, determination is made by using the total number of changes of the phone number in multiple address books or by using the number of changes of the phone number recorded in one address book that are obtained through detection at different moments according to a preset period. As a result, changes of the phone number in the address book of the user may be detected sensitively, and the accuracy of the detected changes of the phone number may also be ensured.

Thus, the solution in Example embodiment 1 provided in the present application solves the technical problem of inaccuracy of a phone number recorded in an address book of a user caused by frequent changes to the phone number in the address book.

It should be noted here that the first detection module 60, the accumulation module 62 and the determination module 64 correspond to step S21 to step S25 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

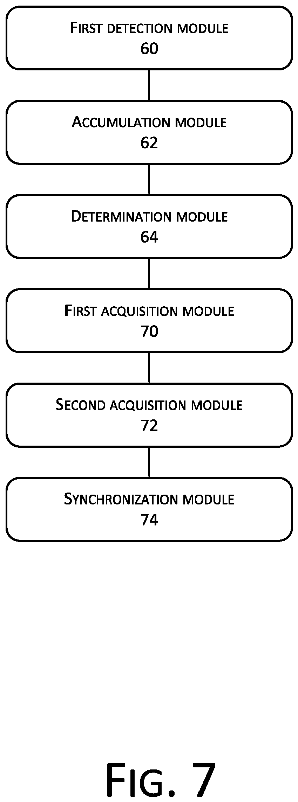

According to this example embodiment of the present invention, with reference to the illustration in FIG. 7, the apparatus further includes:
a first acquisition module 70 configured to acquire a permission to access the first address book; a second acquisition module 72 configured to acquire phone numbers of one or more users in the first address book by scanning the first address book; and a synchronization module 74 configured to synchronize the phone numbers of one or more users in the first address book to a number library.

It should be noted here that the first acquisition module 70, the second acquisition module 72 and the synchronization module 74 correspond to step S27 to step S31 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

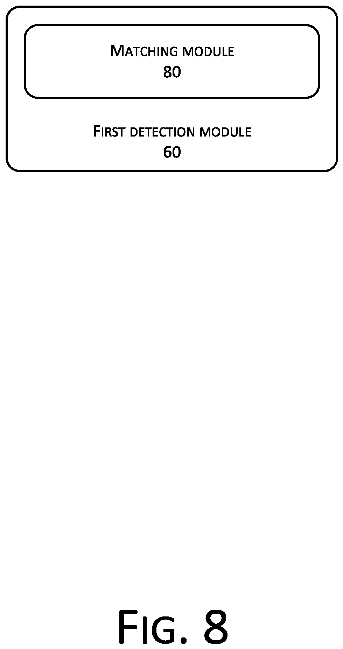

In the above example embodiment of the present application, with reference to the illustration in FIG. 8, the first detection module 60 includes:
a matching module 80 configured to sequentially match the phone numbers of one or more users in the first address book with phone numbers of users pre-stored in the number library; wherein if the first user in the first address book exists in the number library and the phone number of the first user pre-stored in the number library is different from the phone number of the first user in the first address book, it is determined that the phone number of the first user has been changed.

It should be noted here that the matching module 80 corresponds to step S2111 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

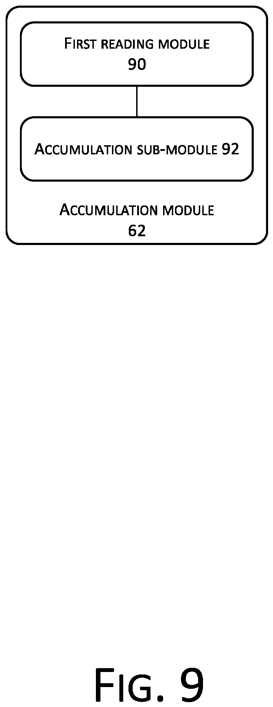

In the above example embodiment of the present application, with reference to the illustration in FIG. 9, the accumulation module 62 includes:
a first reading module 90 configured to read the number of historical changes of the phone number of the first user, wherein each time it is detected that the phone number of the first user recorded in another address book is changed, the number of changes of the phone number of the first user is increased by one to obtain the number of historical changes; and an accumulation sub-module 92 configured to, if it is currently detected that the phone number of the first user recorded in the first address book is changed, increase the number of changes of the phone number of the first user by one again based on the number of historical changes to obtain the total number of the detected changes of the phone number of the first user.

It should be noted here that the first reading module 90 and the accumulation sub-module 92 correspond to step S231 to step S233 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

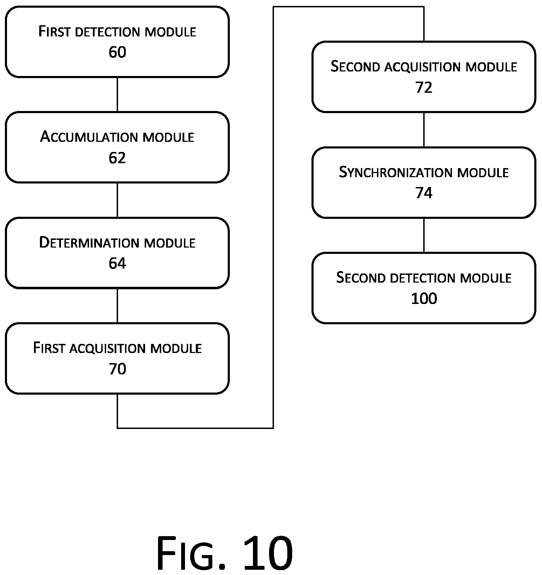

In the above example embodiment of the present application, with reference to the illustration in FIG. 10, the apparatus further includes:
a second detection module 100 configured to detect whether an invalid phone number exists in the first address book.

It should be noted here that the second detection module 100 corresponds to step S231 to step S33 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

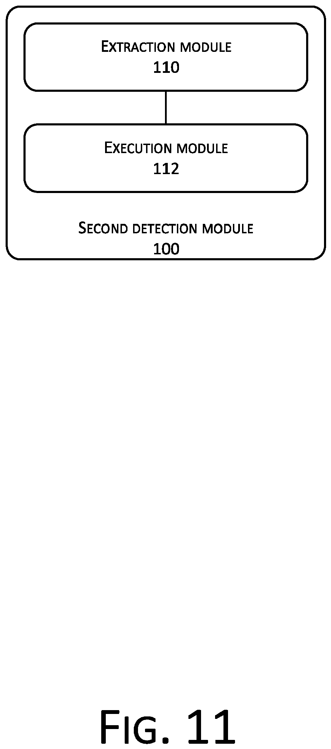

In the above example embodiment of the present application, with reference to the illustration in FIG. 11, the second detection module 100 includes:
an extraction module 110 configured to extract phone numbers of one or more users in the first address book by using a phone simulator; and an execution module 112 configured to simulate, by using the phone simulator, the phone numbers of one or more users to perform any of the following client terminal operations: making a call, sending a text message and sending a message using social software; wherein if the phone simulator simulates a phone number of any user but fails to perform the client terminal operation, it is determined that the phone number for which the client terminal operation is unsuccessful is the invalid phone number.

It should be noted here that the extraction module 110 and the execution module 112 correspond to step S31 to step S33 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

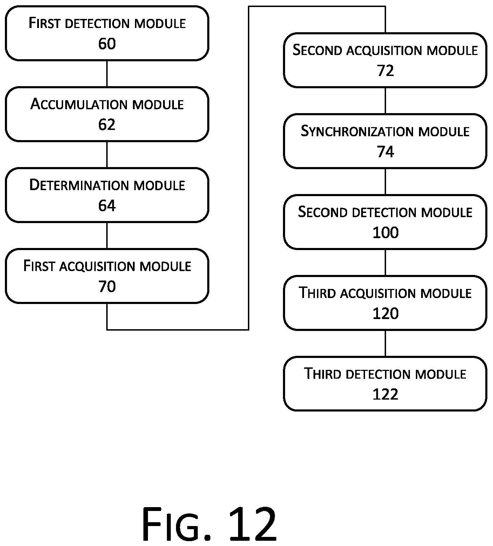

In the above example embodiment of the present application, with reference to the illustration in FIG. 12, the apparatus further includes:
a third acquisition module 120 configured to remove the invalid phone number from the first address book to obtain at least one valid phone number; and a third detection module 122 configured to detect a change of the at least one valid phone number.

It should be noted here that the third acquisition module 120 and the third detection module 122 correspond to step S35 to step S37 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

In the above example embodiment of the present application, after the step of determining that the phone number of the first user has been changed and/or determining that an invalid phone number exists in the first address book, the method further includes: displaying prompt information in an interface of a display terminal, the prompt information including any of the following information: whether to verify the phone number of the first user, whether to replace the phone number of the first user, whether to create a phone number of the first user, and whether to delete a historical phone number of the first user.

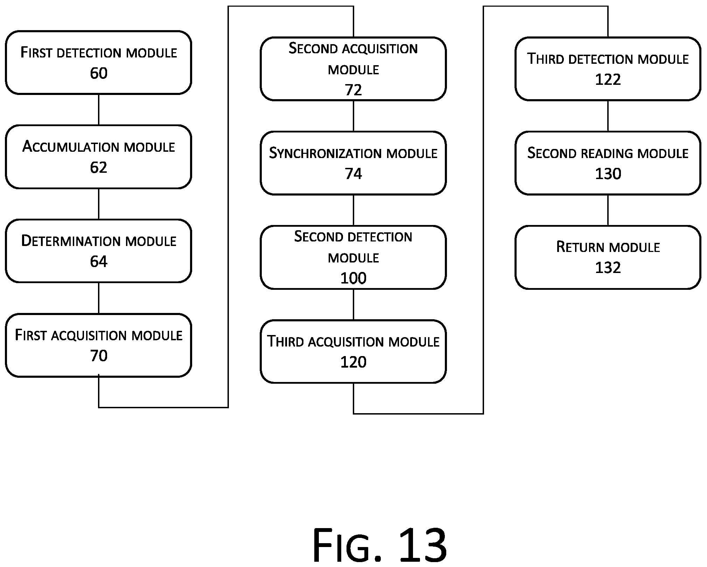

In the above example embodiment of the present application, with reference to the illustration in FIG. 13, the apparatus further includes:
a second reading module 130 configured to read a changed phone number of the first user; and a return module 132 configured to return the changed phone number of the first user to the first address book to update the phone number of the first user previously stored in the first address book or add the changed phone number of the first user to the first address book.

It should be noted here that the second reading module 130 and the return module 132 correspond to step S271 to step S273 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

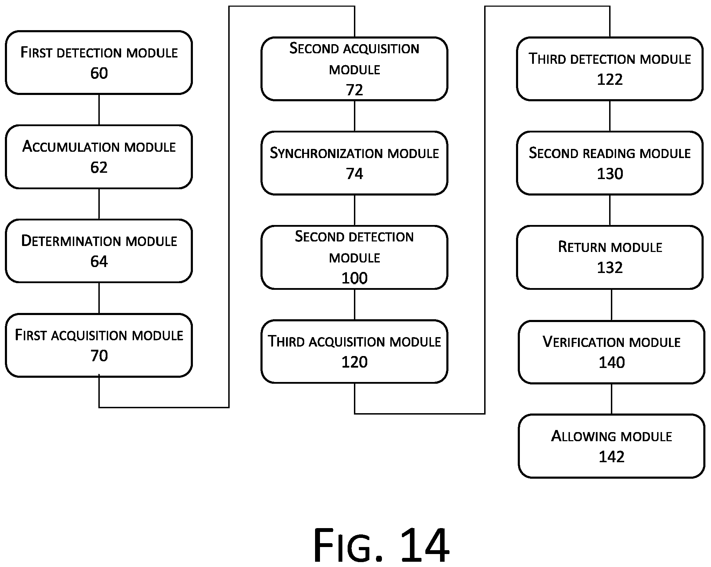

In the above example embodiment of the present application, with reference to the illustration in FIG. 14, the apparatus further includes:
a verification module 140 configured to verify a degree of intimacy between the first user and a second user, wherein the first address book is stored in a communication terminal held by the second user; and an allowing module 142 configured to, if the degree of intimacy between the first user and the second user exceeds a predetermined threshold, allow directly updating the changed phone number of the first user to the first address book.

It should be noted here that the verification module 140 and the allowing module 142 correspond to step S273 to step S275 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

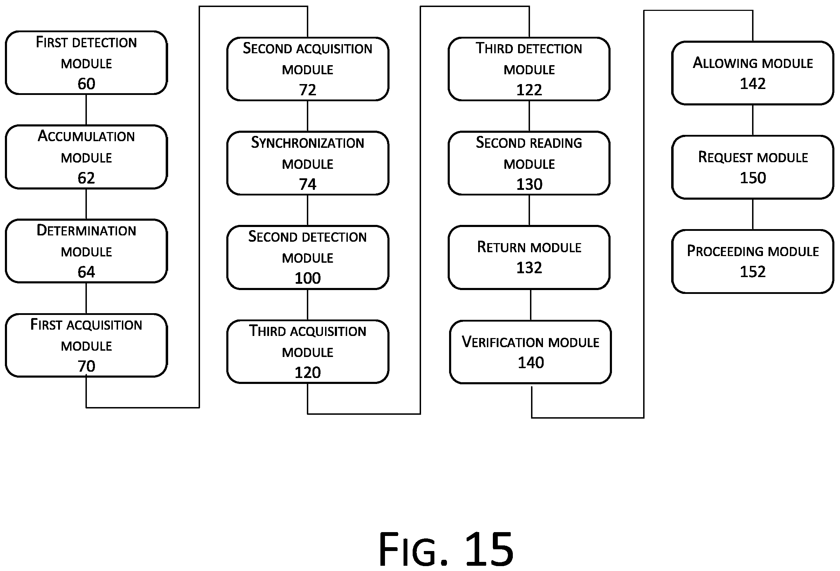

In the above example embodiment of the present application, with reference to the illustration in FIG. 15, the apparatus further includes:
a request module 150 configured to initiate a verification request to a communication terminal held by the first user in any of the following manners: making a call, sending a text message and sending a message using social software; and a proceeding module 152 configured to, after response information returned by the communication terminal held by the first user is received, proceed to perform the step of reading a changed phone number of the first user; wherein the response information includes: confirmation information for confirming that the phone number of the first user has been changed and/or for confirming that the changed phone number of the first user is an accurate number.

It should be noted here that the request module 150 and the proceeding module 152 correspond to step S277 to step S279 in Example embodiment 1. Examples and application scenarios implemented by the two modules are the same as those implemented by the corresponding steps, but the modules are not limited to the content disclosed in Example embodiment 1 above. It should be noted that the modules, as a part of the apparatus, may run in the computer terminal 10 provided in Example embodiment 1.

### Example embodiment 4

This example embodiment of the present invention may provide a computer terminal. The computer terminal may be any computer terminal device in a computer terminal group. Optionally, in this example embodiment, the computer terminal may also be replaced with a terminal device such as a mobile terminal.

Optionally, in this example embodiment, the computer terminal may be at least one network device in multiple network devices located in a computer network.

In this example embodiment, the computer terminal may execute program codes of the following steps in the method for checking a change of a phone number: detecting whether phone numbers of one or more users in a first address book are changed; when it is detected that a phone number of a first user in the first address book is changed, obtaining the total number of detected changes of the phone number of the first user through accumulation; and if the total number exceeds a check threshold, determining that the phone number of the first user has been changed.

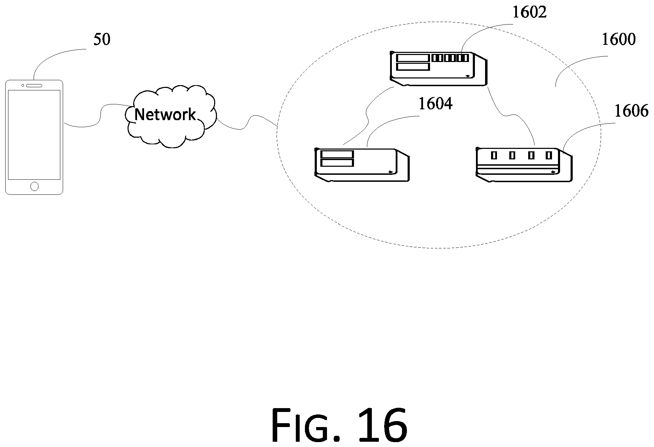

Optionally, FIG. 16 is a structural block diagram of a computer terminal according to Example embodiment 4 of the present application. As shown in FIG. 16, the computer terminal 1600 may include: a mobile terminal 50, one or more (only one is shown in the figure) processors 1602, a memory 1604, and a transmission apparatus 1606.

The memory may be configured to store a software program and a module of application software, for example, a program instruction/module corresponding to the method and apparatus for checking a change of a phone number in this example embodiment of the present invention. The processor may run the software program and module stored in the memory to implement various functional applications and perform data processing, that is, implement the method for checking a change of a phone number. The memory may include a high-speed random-access memory and may further include a non-volatile memory such as one or more magnetic storage apparatuses, a flash memory, or other non-volatile solid-state memories. In some examples, the memory may further include memories remotely disposed with respect to the processor. The remote memories may be connected to the terminal 1600 through a network. Examples of the network include, but are not limited to, the Internet, an intranet, a local area network, a mobile communications network, and a combination of them.

The processor may call, through the transmission apparatus, information and an application program stored in the memory, so as to perform the following steps: detecting whether phone numbers of one or more users in a first address book are changed; when it is detected that a phone number of a first user in the first address book is changed, obtaining the total number of detected changes of the phone number of the first user through accumulation; and if the total number exceeds a check threshold, determining that the phone number of the first user has been changed.

Optionally, the processor may further execute program codes of the following steps: acquiring a permission to access the first address book; acquiring phone numbers of one or more users in the first address book by scanning the first address book; and synchronizing the phone numbers of one or more users in the first address book to a number library.

Optionally, the processor may further execute program codes of the following step: sequentially matching the phone numbers of one or more users in the first address book with phone numbers of users pre-stored in the number library; wherein if the first user in the first address book exists in the number library and the phone number of the first user pre-stored in the number library is different from the phone number of the first user in the first address book, it is determined that the phone number of the first user has been changed.

Optionally, the processor may further execute program codes of the following steps: reading the number of historical changes of the phone number of the first user, wherein each time it is detected that the phone number of the first user recorded in another address book is changed, the number of changes of the phone number of the first user is increased by one to obtain the number of historical changes; and if it is currently detected that the phone number of the first user recorded in the first address book is changed, increasing the number of changes of the phone number of the first user by one again based on the number of historical changes to obtain the total number of the detected changes of the phone number of the first user.

Optionally, the processor may further execute program codes of the following step: detecting whether an invalid phone number exists in the first address book.

Optionally, the processor may further execute program codes of the following steps: extracting phone numbers of one or more users in the first address book by using a phone simulator; and simulating, by the phone simulator, the phone numbers of one or more users to perform any of the following client terminal operations: making a call, sending a text message and sending a message using social software; wherein if the phone simulator simulates a phone number of any user but fails to perform the client terminal operation, it is determined that the phone number for which the client terminal operation is unsuccessful is the invalid phone number.

Optionally, the processor may further execute program codes of the following steps: removing the invalid phone number from the first address book to obtain at least one valid phone number; and detecting a change of the at least one valid phone number.

Optionally, the processor may further execute program codes of the following step: displaying prompt information in an interface of a display terminal, the prompt information including any of the following information: whether to verify the phone number of the first user, whether to replace the phone number of the first user, whether to create a phone number of the first user, and whether to delete a historical phone number of the first user.

Optionally, the processor may further execute program codes of the following steps: reading a changed phone number of the first user; and returning the changed phone number of the first user to the first address book to update the phone number of the first user previously stored in the first address book or add the changed phone number of the first user to the first address book.

Optionally, the processor may further execute program codes of the following steps: verifying a degree of intimacy between the first user and a second user, wherein the first address book is stored in a communication terminal held by the second user; and if the degree of intimacy between the first user and the second user exceeds a predetermined threshold, allowing directly updating the changed phone number of the first user to the first address book.

Optionally, the processor may further execute program codes of the following steps: initiating a verification request to a communication terminal held by the first user in any of the following manners: making a call, sending a text message and sending a message using social software; and after response information returned by the communication terminal held by the first user is received, proceeding to perform the step of reading a changed phone number of the first user; wherein the response information includes: confirmation information for confirming that the phone number of the first user has been changed and/or for confirming that the changed phone number of the first user is an accurate number.

According to the example embodiment of the present invention, a solution of checking a change of a phone number is provided. It is detected whether phone numbers of one or more users in a first address book are changed; when it is detected that a phone number of a first user in the first address book is changed, the total number of detected changes of the phone number of the first user is obtained through accumulation; and if the total number exceeds a check threshold, it is determined that the phone number of the first user has been changed. As such, the objective of making a user timely know a changed phone number in an address book is achieved, thus solving the technical problem of inaccuracy of a phone number recorded in an address book of a user caused by frequent changes to the phone number in the address book.

Those of ordinary skill in the art may understand that the structure shown in FIG. 16 is merely an example. The computer terminal may also be a terminal device such as a smart phone (such as an Android phone, an iOS phone, or the like), a tablet computer, a palmtop computer, a Mobile Internet Device (MID), or a PAD. FIG. 16 does not limit the structure of the foregoing electronic apparatus. For example, the computer terminal 10 may further include more or fewer components (a network interface, a display apparatus, or the like) than those shown in FIG. 16, or has a configuration different from that shown in FIG. 16.

Those of ordinary skill in the art may understand that all or some steps in the methods in the foregoing example embodiments may be completed by a program instructing related hardware of the terminal device. The program may be stored in a computer readable storage medium. The storage medium may include: a flash disk, a Read-Only Memory (ROM), a Random Access Memory (RAM), a magnetic disk, an optical disc, or the like.

### Example embodiment 5

The example embodiments of the present invention further provide a storage medium. Optionally, in this example embodiment, the storage medium may be configured to store program codes executed by the method for checking a change of a phone number provided in Example embodiment 1.

Optionally, in this example embodiment, the storage medium may be located in any computer terminal in a computer terminal group in a computer network or located in any mobile terminal in a mobile terminal group.

Optionally, in this example embodiment, the storage medium is configured to store program codes for performing the following steps: the processor may call, through the transmission apparatus, information and an application program stored in the memory, so as to perform the following steps: detecting whether phone numbers of one or more users in a first address book are changed; when it is detected that a phone number of a first user in the first address book is changed, obtaining the total number of detected changes of the phone number of the first user through accumulation; and if the total number exceeds a check threshold, determining that the phone number of the first user has been changed.

Optionally, in this example embodiment, the storage medium is configured to store program codes for performing the following steps: acquiring a permission to access the first address book; acquiring phone numbers of one or more users in the first address book by scanning the first address book; and synchronizing the phone numbers of one or more users in the first address book to a number library.

Optionally, in this example embodiment, the storage medium is configured to store program codes for performing the following step: sequentially matching the phone numbers of one or more users in the first address book with phone numbers of users pre-stored in the number library; wherein if the first user in the first address book exists in the number library and the phone number of the first user pre-stored in the number library is different from the phone number of the first user in the first address book, it is determined that the phone number of the first user has been changed.

Optionally, in this example embodiment, the storage medium is configured to store program codes for performing the following steps: reading the number of historical changes of the phone number of the first user, wherein each time it is detected that the phone number of the first user recorded in another address book is changed, the number of changes of the phone number of the first user is increased by one to obtain the number of historical changes; and if it is currently detected that the phone number of the first user recorded in the first address book is changed, increasing the number of changes of the phone number of the first user by one again based on the number of historical changes to obtain the total number of the detected changes of the phone number of the first user.

Optionally, in this example embodiment, the storage medium is configured to store program codes for performing the following step: detecting whether an invalid phone number exists in the first address book.

Optionally, in this example embodiment, the storage medium is configured to store program codes for performing the following steps: extracting phone numbers of one or more users in the first address book by using a phone simulator; and simulating, by the phone simulator, the phone numbers of one or more users to perform any of the following client terminal operations: making a call, sending a text message and sending a message using social software; wherein if the phone simulator simulates a phone number of any user but fails to perform the client terminal operation, it is determined that the phone number for which the client terminal operation is unsuccessful is the invalid phone number.

Optionally, in this example embodiment, the storage medium is configured to store program codes for performing the following steps: removing the invalid phone number from the first address book to obtain at least one valid phone number; and detecting a change of the at least one valid phone number.

Optionally, in this example embodiment, the storage medium is configured to store program codes for performing the following step: displaying prompt information in an interface of a display terminal, the prompt information including any of the following information: whether to verify the phone number of the first user, whether to replace the phone number of the first user, whether to create a phone number of the first user, and whether to delete a historical phone number of the first user.

Optionally, in this example embodiment, the storage medium is configured to store program codes for performing the following steps: reading a changed phone number of the first user; and returning the changed phone number of the first user to the first address book to update the phone number of the first user previously stored in the first address book or add the changed phone number of the first user to the first address book.

Optionally, in this example embodiment, the storage medium is configured to store program codes for performing the following steps: verifying a degree of intimacy between the first user and a second user, wherein the first address book is stored in a communication terminal held by the second user; and if the degree of intimacy between the first user and the second user exceeds a predetermined threshold, allowing directly updating the changed phone number of the first user to the first address book.

Optionally, in this example embodiment, the storage medium is configured to store program codes for performing the following steps: initiating a verification request to a communication terminal held by the first user in any of the following manners: making a call, sending a text message and sending a message using social software; and after response information returned by the communication terminal held by the first user is received, proceeding to perform the step of reading a changed phone number of the first user; wherein the response information includes: confirmation information for confirming that the phone number of the first user has been changed and/or for confirming that the changed phone number of the first user is an accurate number.

The serial numbers of the foregoing example embodiments of the present invention are merely used for description, and do not imply the preference among the example embodiments.

In the foregoing example embodiments of the present invention, the description of each example embodiment has respective focuses. For a part that is not described in detail in an example embodiment, reference may be made to related descriptions in other example embodiments.

In the several example embodiments provided in the present application, it should be understood that the disclosed technical content may be implemented in other manners. The apparatus example embodiment described above is merely schematic. For example, the unit division is merely logical function division, and there may be other division manners in an actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between units or modules may be implemented in an electronic form or other forms.

Units described as separate parts may or may not be physically separate, parts displayed as units may or may not be physical units, and they may be located at the same place, or distributed on multiple network units. The objective of the solution of the example embodiment may be implemented by selecting some or all of the units according to actual requirements.

In addition, functional units in the example embodiments of the present invention may be integrated in a processing unit, or the units may also exist physically separately, or two or more units are integrated in one unit. The integrated unit may be implemented in the form of hardware or in the form of a software functional unit.

When the integrated unit is implemented in the form of a software functional unit and sold or used as an independent product, the integrated unit may be stored in a computer readable storage medium. Based on such understanding, the technical solutions of the present invention essentially, or the part making contributions to the prior art, or some or all of the technical solutions may be implemented in the form of a software product. The computer software product may be stored in a storage medium and include several instructions for instructing a computer device (which may be a personal computer, a server, a network device, or the like) to perform all or some steps of the methods of example embodiments of the present invention. The foregoing storage medium includes any medium that may store program codes, such as a USB flash drive, a Read-Only Memory (ROM), a Random Access Memory (RAM), a mobile hard disk drive, a magnetic disk, or an optical disc.

Described above are merely preferred implementation manners of the present invention. It should be noted that those of ordinary skill in the art may further make several improvements or modifications without departing from the principle of the present invention, and these improvements and modifications should also be construed as the protection scope of the present invention.

## Claims

1. A method for checking a change of a phone number, the method comprising:
detecting whether phone numbers of one or more users in a first address book are changed;
when detecting that a phone number of a first user in the first address book is changed, obtaining a total number of detected changes of the phone number of the first user through accumulation; and
in response to determining that the total number of detected changes exceeds a check threshold, determining that the phone number of the first user has been changed.

2. The method of claim 1, wherein before detecting whether the phone numbers of the one or more users in the first address book are changed, the method further comprises:
acquiring a permission to access the first address book;
acquiring the phone numbers of the one or more users in the first address book by scanning the first address book; and
synchronizing the phone numbers of the one or more users in the first address book to a number library.

3. The method of claim 2, wherein the detecting whether the phone numbers of the one or more users in the first address book are changed comprises:
sequentially matching the phone numbers of the one or more users in the first address book with phone numbers of users pre-stored in the number library;
in response to determining that the first user in the first address book exists in the number library and a phone number of the first user pre-stored in the number library is different from the phone number of the first user in the first address book, determining that the phone number of the first user has been changed.

4. The method of claim 1, wherein the obtaining the total number of detected changes of the phone number of the first user through accumulation comprises:
reading a number of historical changes of the phone number of the first user, the reading including:
each time when detecting that the phone number of the first user recorded in another address book is changed, increasing the number of changes of the phone number of the first user by one to obtain the number of historical changes; and
when detecting that the phone number of the first user recorded in the first address book is changed, increasing the number of historical changes by one to obtain the total number of the detected changes of the phone number of the first user.

5. The method of any of claims 1 to 4, wherein before the detecting whether the phone numbers of the one or more users in the first address book are changed, the method further comprises:
detecting whether an invalid phone number exists in the first address book.

6. The method of claim 5, wherein the detecting whether the invalid phone number exists in the first address book comprises:
extracting the phone numbers of the one or more users in the first address book by using a phone simulator, wherein the phone simulator simulates a respective phone number to perform any of following client terminal operations including: making a call, sending a text message, and sending a message using social software;
in response to determining that the respective phone number simulated by the phone simulator fails to perform any of the client terminal operation, determining that the respective phone number for which the client terminal operation fails is the invalid phone number.

7. The method of claim 5, wherein after the detecting whether the invalid phone number exists in the first address book, the method further comprises:
removing the invalid phone number from the first address book to obtain at least one valid phone number; and
detecting a change of the at least one valid phone number.

8. The method of claim 5, wherein after the determining that the phone number of the first user has been changed and/or determining that the invalid phone number exists in the first address book, the method further comprises:
displaying prompt information in an interface of a display terminal, the prompt information including any of following information:
whether to verify the phone number of the first user;
whether to replace the phone number of the first user;
whether to create a phone number of the first user; and
whether to delete a historical phone number of the first user.

9. The method of claim 1, wherein after the determining that the phone number of the first user has been changed, the method further comprises:
reading a changed phone number of the first user after the phone number of the first user is changed; and
returning the changed phone number of the first user to the first address book to update the phone number of the first user previously stored in the first address book or add the changed phone number of the first user to the first address book.

10. The method of claim 9, wherein before the reading the changed phone number of the first user, the method further comprises:
verifying a degree of intimacy between the first user and a second user, wherein the first address book is stored in a communication terminal held by the second user; and
in response to determining that the degree of intimacy between the first user and the second user exceeds a predetermined threshold, allowing directly updating the changed phone number of the first user to the first address book.

11. The method of claim 9, wherein before the reading the changed phone number of the first user, the method further comprises:
initiating a verification request to a communication terminal held by the first user in any of following manners: making a call, sending a text message, and sending a message using social software; and
after receiving response information returned by the communication terminal held by the first user, proceeding to perform reading the changed phone number of the first user,
wherein the response information includes: confirmation information for confirming that the phone number of the first user has been changed and/or for confirming that the changed phone number of the first user is an accurate number.

12. A system for checking a change of a phone number, the system comprising:
a mobile terminal configured to store a first address book, wherein the first address book records phone numbers of one or more users; and
a cloud server having a communication relationship with the mobile terminal, configured to detect whether the phone numbers of one or more users in the first address book are changed, when detecting that a phone number of a first user in the first address book is changed, obtain a total number of detected changes of the phone number of the first user through accumulation, and in response to determining that the total number of detected changes exceeds a check threshold, determine that the phone number of the first user has been changed.

13. The system of claim 12, wherein the system further comprises:
a scanner connected between the mobile terminal and the cloud server, configured to scan the first address book and synchronize the phone numbers of the one or more users in the first address book to a number library in the cloud server;
wherein if the first user in the first address book exists in the number library and a phone number of the first user pre-stored in the number library is different from the phone number of the first user in the first address book, the phone number of the first user is determined to be have been changed.

14. The system of claim 12 or 13, wherein the cloud server comprises:
a phone simulator configured to simulate the phone numbers of the one or more users in the first address book to perform any of following client terminal operations: making a call, sending a text message, and sending a message using social software;
wherein if a phone number simulated by the phone simulator fails to perform any of the client terminal operation, the phone simulator determines that the phone number for which the client terminal operation fails is an invalid phone number.

15. An apparatus for checking a change of a phone number, the apparatus comprising:
a detection module configured to detect whether phone numbers of one or more users in a first address book are changed;
an accumulation module configured to, when detecting that a phone number of a first user in the first address book is changed, obtain a total number of detected changes of the phone number of the first user through accumulation; and
a determination module configured to, in response to determining that the total number of detected changes exceeds a check threshold, determine that the phone number of the first user has been changed.

16. The apparatus of claim 15, wherein the detection module comprises:
a matching module configured to sequentially match the phone numbers of the one or more users in the first address book with phone numbers of users pre-stored in the number library; and
a determination sub-module configured to, in response to determining that the first user in the first address book exists in the number library and a phone number of the first user pre-stored in the number library is different from the phone number of the first user in the first address book, determine that the phone number of the first user has been changed.
